(19) Europäisches Patentamt
European Patent Office
Office européen des brevets

(11) **EP 4 489 487 A1**

(12) **EUROPEAN PATENT APPLICATION**
published in accordance with Art. 153(4) EPC

(43) Date of publication:
**08.01.2025   Bulletin 2025/02**

(21) Application number: **23811052.2**

(22) Date of filing: **23.05.2023**

(51) International Patent Classification (IPC):
*H04W 68/02* (2009.01)

(52) Cooperative Patent Classification (CPC):
H04W 68/02

(86) International application number:
**PCT/CN2023/095789**

(87) International publication number:
**WO 2023/226981 (30.11.2023 Gazette 2023/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **25.05.2022   CN 202210583492**

(71) Applicant: **Huawei Technologies Co., Ltd.
Shenzhen, Guangdong 518129 (CN)**

(72) Inventors:
• **ZENG, Yu
  Shenzhen, Guangdong 518129 (CN)**
• **GENG, Tingting
  Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **PAGING METHOD AND COMMUNICATION APPARATUS**

(57)     The present disclosure provides a paging method and a communication apparatus, to improve efficiency of paging a terminal device. The method includes: obtaining first information, where the first information indicates a moving trajectory of a terminal device, the moving trajectory of the terminal device includes N1 historical locations of the terminal device before a first moment and/or N2 predicted locations of the terminal device after the first moment, N1 and N2 are positive integers, and the first moment is a moment at which the terminal device changes from a connected state to a non-connected state or an inactive state; determining a predicted location of the terminal device at a second moment based on the first information, where the second moment is later than the first moment; and sending a paging message to an access network device to which a target cell belongs, where the paging message includes information indicating the target cell, and the predicted location of the terminal device at the second moment is in the target cell.

FIG. 6

**Description**

**CROSS-REFERENCE TO RELATED APPLICATIONS**

This application claims priority to Chinese Patent Application No. 202210583492.6, filed with the China National Intellectual Property Administration on May 25, 2022 and entitled "PAGING METHOD AND COMMUNICATION APPARATUS", which is incorporated herein by reference in its entirety.

**TECHNICAL FIELD**

Embodiments of this application relate to the field of communication technologies, and in particular, to a paging method and a communication apparatus.

**BACKGROUND**

In a wireless communication network, when a terminal device does not transmit data, the terminal device enters an idle (IDLE) state or an inactive (INACTIVE) state. In the two states, the terminal device and an access network device are disconnected. If the access network device needs to send a signal to the terminal device again, the access network device needs to first find the terminal device through paging (paging), and then transmit the signal after establishing a connection to the terminal device.

Currently, paging is usually performed in the following manner: When the terminal device is in the idle state, a core network performs paging in all cells in a tracking area (tracking area, TA) with which the terminal device registers in the core network; or when the terminal device is in the inactive state, the access network device needs to perform paging in all cells in a configured radio access node notification area (radio access node notification area, RNA). In this manner, a paging range is large, and paging efficiency is low.

**SUMMARY**

The present disclosure provides a paging method and a communication apparatus, to improve efficiency of paging a terminal device.

According to a first aspect, the present disclosure provides a paging method. The paging method may be applied to a core network element or a first access network device. The first access network device is an access network device that provides a service for a terminal device before the terminal device enters a non-connected state. The non-connected state includes an inactive state or an idle state.

Specifically, the paging method includes: obtaining first information, where the first information indicates a moving trajectory of a terminal device, the moving trajectory of the terminal device includes N1 historical locations of the terminal device before a first moment and/or N2 predicted locations of the terminal device after the first moment, N1 and N2 are positive integers, and the first moment is a moment at which the terminal device changes from a connected state to a non-connected state or an inactive state; determining a predicted location of the terminal device at a second moment based on the first information, where the second moment is later than the first moment; and sending, at the second moment, a paging message to an access network device to which a target cell belongs, where the paging message includes information indicating the target cell, and the predicted location of the terminal device at the second moment is in the target cell.

In the above design, historical trajectory information and predicted trajectory information of the terminal device are introduced, so that a paging range of the terminal device is accurate to the target cell. This can reduce signaling overheads and a delay that are related to paging, and improve paging efficiency and accuracy.

In a possible design, when the paging method is applied to the core network element, the obtaining first information includes: obtaining, before the first moment, a context release message of the terminal device from an access network device that provides a service for the terminal device, where the context release message includes the first information.

In another possible design, when the paging method is applied to the core network element or the first access network device, the obtaining first information includes: receiving the first information from the terminal device before the first moment.

The foregoing provides implementations of obtaining the first information in two different cases.

In a possible design, the determining a predicted location of the terminal device at a second moment based on the first information includes: when the moving trajectory of the terminal device includes the N1 historical locations, determining the predicted location of the terminal device at the second moment based on the N1 historical locations of the terminal device before the first moment; or when the moving trajectory of the terminal device includes the N2 predicted locations, determining the predicted location of the terminal device at the second moment from the N2 predicted locations. Such a design matches content of the first information, and provides various solutions for determining the predicted location of the terminal device at the second moment, so that the method is more flexibly implemented.

In a possible design, the predicted location of the terminal device at the second moment is in a coverage range of a target beam in the target cell, and the paging message includes information indicating the target beam. In another possible design, the paging method further includes: sending, at the second moment, second information to the access network device to which the target cell belongs, where the second information indicates the N2 predicted locations of the terminal device after the first moment, the second information is used to determine a target beam in the target cell, and the predicted location of the terminal device at the second moment is in a coverage range of the target beam. According to such a design, the paging range of the terminal device can be further accurate to the target beam in the target cell, thereby reducing signaling overheads and a delay that are related to paging, and improving paging efficiency and accuracy.

In a possible design, the paging method further includes: receiving a first paging response message from the access network device to which the target cell belongs, where the first paging response message indicates that the terminal device is successfully paged, the first paging response message includes third information, and the third information indicates one or more of the following: a beam over which the terminal device accesses the target cell; location information of the terminal device when the paging succeeds; and location information of the terminal device before the paging succeeds. Actual location information of the terminal device can be exchanged by using the third information.

In a possible design, the paging method further includes: predicting, based on the third information, a location of the terminal device after the paging succeeds. According to such a design, a future location is predicted by using the actual location information of the terminal device, so that location prediction accuracy can be improved.

According to a second aspect, the present disclosure provides a paging method. The paging method may be applied to a second access network device. The second access network device is an access network device to which a paging range (target cell) corresponding to a terminal device belongs.

Specifically, the paging method includes: obtaining a paging message, where the paging message includes information indicating a target cell, the target cell is determined based on a moving trajectory of a terminal device, the moving trajectory of the terminal device includes N1 historical locations of the terminal device before a first moment and/or N2 predicted locations of the terminal device after the first moment, N1 and N2 are positive integers, the first moment is a moment at which the terminal device changes from a connected state to a non-connected state or an inactive state, a predicted location of the terminal device at a second moment is in the target cell, and the second moment is later than the first moment; and paging the terminal device in the target cell based on the paging message.

In a possible design, the paging message includes information indicating a target beam, and the predicted location of the terminal device at the second moment is in a coverage range of the target beam.

In a possible design, the paging method further includes: obtaining second information, where the second information indicates the N2 predicted locations of the terminal device after the first moment; and determining a target beam in the target cell based on the second information, where the predicted location of the terminal device at the second moment is in a coverage range of the target beam.

In a possible design, the paging the terminal device in the target cell includes: paging the terminal device in the coverage range of the target beam in the target cell.

In a possible design, the paging method further includes: sending a paging response message, where the paging response message indicates that the terminal device is successfully paged, the paging response message includes third information, and the third information indicates one or more of the following: a beam over which the terminal device accesses the target cell; location information of the terminal device when the paging succeeds; and location information of the terminal device before the paging succeeds.

According to a third aspect, the present disclosure provides a communication apparatus. The communication apparatus may be a core network element, or may be an apparatus, a module, a chip, or the like in a core network element, or may be an apparatus that can be used together with a core network element. Alternatively, the communication apparatus may be a first access network device, or may be an apparatus, a module, a chip, or the like in a first access network device, or may be an apparatus that can be used together with a first access network device. In a design, the communication apparatus may include modules that are in one-to-one correspondence with the method/operation/step/action described in the first aspect. The modules may be implemented by a hardware circuit, software, or a combination of the hardware circuit and the software. In a design, the communication apparatus may include a processing module and a communication module.

The communication module is configured to obtain first information, where the first information indicates a moving trajectory of a terminal device, the moving trajectory of the terminal device includes N1 historical locations of the terminal device before a first moment and/or N2 predicted locations of the terminal device after the first moment, N1 and N2 are positive integers, and the first moment is a moment at which the terminal device changes from a connected state to a non-connected state or an inactive state. The processing module is configured to: determine a predicted location of the terminal device at a second moment based on the first information, where the second moment is later than the first moment; and send, at the second moment through the communication module, a paging message to an access network device to which a target cell belongs, where the paging message includes information indicating the target cell, and the predicted location of the terminal device at the second moment is in the target cell.

In a possible design, the communication module is specifically configured to: obtain, before the first moment, a context release message of the terminal device from an access network device that provides a service for the terminal device, where the context release message includes the first information.

In another possible design, the communication module is specifically configured to receive the first information from the terminal device before the first moment.

In a possible design, the processing module is specifically configured to: when the moving trajectory of the terminal device includes the N1 historical locations, determine the predicted location of the terminal device at the second moment based on the N1 historical locations of the terminal device before the first moment; or when the moving trajectory of the terminal device includes the N2 predicted locations, determine the predicted location of the terminal device at the second moment from the N2 predicted locations.

In a possible design, the predicted location of the terminal device at the second moment is in a coverage range of a target beam in the target cell, and the paging message includes information indicating the target beam. In another possible design, the processing module is further configured to: send, at the second moment through the communication module, second information to the access network device to which the target cell belongs, where the second information indicates the N2 predicted locations of the terminal device after the first moment, the second information is used to determine a target beam in the target cell, and the predicted location of the terminal device at the second moment is in a coverage range of the target beam.

In a possible design, the communication module is further configured to: receive a first paging response message from the access network device to which the target cell belongs, where the first paging response message indicates that the terminal device is successfully paged, the first paging response message includes third information, and the third information indicates one or more of the following: a beam over which the terminal device accesses the target cell; location information of the terminal device when the paging succeeds; and location information of the terminal device before the paging succeeds.

In a possible design, the processing module is further configured to predict, based on the third information, a location of the terminal device after the paging succeeds.

According to a fourth aspect, the present disclosure provides a communication apparatus. The communication apparatus may be a second access network device, or may be an apparatus, a module, a chip, or the like in a second access network device, or may be an apparatus that can be used together with a second access network device. In a design, the communication apparatus may include modules that are in one-to-one correspondence with the method/operation/step/action described in the second aspect. The modules may be implemented by a hardware circuit, software, or a combination of the hardware circuit and the software. In a design, the communication apparatus may include a processing module and a communication module.

The communication module is configured to obtain a paging message, where the paging message includes information indicating a target cell, the target cell is determined based on a moving trajectory of a terminal device, the moving trajectory of the terminal device includes N1 historical locations of the terminal device before a first moment and/or N2 predicted locations of the terminal device after the first moment, N1 and N2 are positive integers, the first moment is a moment at which the terminal device changes from a connected state to a non-connected state or an inactive state, a predicted location of the terminal device at a second moment is in the target cell, and the second moment is later than the first moment. The processing module is configured to page the terminal device in the target cell based on the paging message.

In a possible design, the paging message includes information indicating a target beam, and the predicted location of the terminal device at the second moment is in a coverage range of the target beam.

In a possible design, the communication module is further configured to obtain second information, where the second information indicates the N2 predicted locations of the terminal device after the first moment. The processing module is further configured to determine a target beam in the target cell based on the second information, where the predicted location of the terminal device at the second moment is in a coverage range of the target beam.

In a possible design, the processing module is further configured to page the terminal device in the coverage range of the target beam in the target cell.

In a possible design, the processing module is further configured to send a paging response message through the communication module, where the paging response message indicates that the terminal device is successfully paged, the paging response message includes third information, and the third information indicates one or more of the following: a beam over which the terminal device accesses the target cell; location information of the terminal device when the paging succeeds; and location information of the terminal device before the paging succeeds.

According to a fifth aspect, the present disclosure provides a communication apparatus. The communication apparatus includes a processor, configured to implement the method described in the first aspect. The processor is coupled to a memory. The memory is configured to store instructions and data. When the processor executes the instructions stored in the memory, the method described in the first aspect can be implemented. Optionally, the communication apparatus may further include a memory. The communication apparatus may further include a communication interface. The communication interface is used by the apparatus to communicate with another device. For example, the communication interface may be a transceiver, a circuit, a bus, a module, a pin, or a communication interface of another type.

In a possible device, the communication apparatus includes: a memory, configured to store program instructions; and a processor, configured to obtain first information through the communication interface, where the first information indicates a moving trajectory of a terminal device, the moving trajectory of the terminal device includes N1 historical locations of the terminal device before a first moment and/or N2 predicted locations of the terminal device after the first moment, N1 and N2 are positive integers, and the first moment is a moment at which the terminal device changes from a connected state to a non-connected state or an inactive state. The processor is further configured to: determine a predicted location of the terminal device at a second moment based on the first information, where the second moment is later than the first moment; and send, at the second moment through the communication module, a paging message to an access network device to which a target cell belongs, where the paging message includes information indicating the target cell, and the predicted location of the terminal device at the second moment is in the target cell.

According to a sixth aspect, the present disclosure provides a communication apparatus. The communication apparatus includes a processor, configured to implement the method described in the second aspect. The processor is coupled to a memory. The memory is configured to store instructions and data. When the processor executes the instructions stored in the memory, the method described in the second aspect can be implemented. Optionally, the communication apparatus may further include a memory. The communication apparatus may further include a communication interface. The communication interface is used by the apparatus to communicate with another device. For example, the communication interface may be a transceiver, a circuit, a bus, a module, a pin, or a communication interface of another type.

In a possible device, the communication apparatus includes: a memory, configured to store program instructions; and a processor, configured to obtain a paging message through the communication interface, where the paging message includes information indicating a target cell, the target cell is determined based on a moving trajectory of a terminal device, the moving trajectory of the terminal device includes N1 historical locations of the terminal device before a first moment and/or N2 predicted locations of the terminal device after the first moment, N1 and N2 are positive integers, the first moment is a moment at which the terminal device changes from a connected state to a non-connected state or an inactive state, a predicted location of the terminal device at a second moment is in the target cell, and the second moment is later than the first moment. The processor is further configured to page the terminal device in the target cell based on the paging message.

According to a seventh aspect, the present disclosure provides a communication system, including the communication apparatus described in the third aspect or the fifth aspect and the communication apparatus described in the fourth aspect or the sixth aspect.

According to an eighth aspect, the present disclosure further provides a computer program. When the computer program is run on a computer, the computer is enabled to perform the method provided in either of the first aspect or the second aspect.

According to a ninth aspect, the present disclosure further provides a computer program product, including instructions. When the instructions are run on a computer, the computer is enabled to perform the method provided in either of the first aspect or the second aspect.

According to a tenth aspect, the present disclosure further provides a computer-readable storage medium. The computer-readable storage medium stores a computer program or instructions, and when the computer program or the instructions are run on a computer, the computer is enabled to perform the method provided in either of the first aspect or the second aspect.

According to an eleventh aspect, the present disclosure further provides a chip. The chip is configured to read a computer program stored in a memory, to perform the method provided in either of the first aspect or the second aspect.

According to a twelfth aspect, the present disclosure further provides a chip system. The chip system includes a processor, configured to support a computer apparatus in implementing the method provided in either of the first aspect or the second aspect. In a possible design, the chip system further includes a memory, and the memory is configured to store a program and data that are necessary for the computer apparatus. The chip system may include a chip, or may include a chip and another discrete component.

For technical effects that can be brought by any one of the second aspect to the twelfth aspect, refer to the descriptions of the effects that can be brought by the design solutions of the first aspect. Details are not described herein again.

**BRIEF DESCRIPTION OF DRAWINGS**

FIG. 1 is a diagram of an architecture of a communication system according to the present disclosure;

FIG. 2A is a diagram of a structure of an access network device according to the present disclosure;

FIG. 2B is a diagram of a structure of another access network device according to the present disclosure;

FIG. 3 is a diagram of a relationship between a TA and an RNA;

FIG. 4 is a diagram of a monitoring location of a paging message;

FIG. 5A is a diagram of a neuron structure;

FIG. 5B is a diagram of a layer relationship of a neural network;

FIG. 5C is a diagram of an AI application framework according to the present disclosure;

FIG. 6 is a schematic flowchart of a paging method according to the present disclosure;

FIG. 7 is a schematic flowchart of a paging method according to the present disclosure;

FIG. 8 is a schematic flowchart of a paging method according to the present disclosure;

FIG. 9 is a diagram of a structure of a communication apparatus according to the present disclosure; and

FIG. 10 is a diagram of a structure of a communication apparatus according to the present disclosure.

**DESCRIPTION OF EMBODIMENTS**

To make the objectives, technical solutions, and advantages of the present disclosure clearer, the following further describes the present disclosure in detail with reference to the accompanying drawings.

The at least one (item) described in the present disclosure below indicates one (item) or more (items). The plurality of (items) indicates two (items) or more than two (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although the terms such as first and second may be used in the present disclosure to describe objects, these objects are not limited by these terms. These terms are merely used to distinguish the objects from each other.

Terms "including", "having", and any other variant thereof mentioned in descriptions of the present disclosure below are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that in the present disclosure, the term such as "example" or "for example" represents giving an example, an illustration, or a description. Any method or design scheme described in the present disclosure as "example" or "for example" should not be construed as being more preferred or advantageous over another method or design scheme. To be precise, use of the word such as "example" or "for example" is intended to present a relative concept in a specific manner.

The technologies provided in the present disclosure may be applied to various communication systems. For example, the communication system may be a 3rd generation (3rd generation, 3G) communication system (for example, a universal mobile telecommunications system (universal mobile telecommunications system, UMTS)), a 4th generation (4th generation, 4G) communication system (for example, a long term evolution (long term evolution, LTE) system), a 5th generation (5th generation, 5G) communication system, a worldwide interoperability for microwave access (worldwide interoperability for microwave access, WiMAX) or wireless local area network (wireless local area network, WLAN) system, a converged system of a plurality of systems, or a future communication system, for example, a 6G communication system. The 5G communication system may also be referred to as a new radio (new radio, NR) system.

A network element in a communication system may send a signal to another network element or receive a signal from another network element. The signal may include information, signaling, data, or the like. The network element may alternatively be replaced with an entity, a network entity, a device, a communication device, a communication module, a node, a communication node, or the like. In the present disclosure, the network element is used as an example for description. For example, the communication system may include at least one terminal device and at least one access network device. The access network device may send a downlink signal to the terminal device, and/or the terminal device may send an uplink signal to the access network device. In addition, it may be understood that if the communication system includes a plurality of terminal devices, the plurality of terminal devices may also send signals to each other. In other words, both a signal sending network element and a signal receiving network element may be terminal devices.

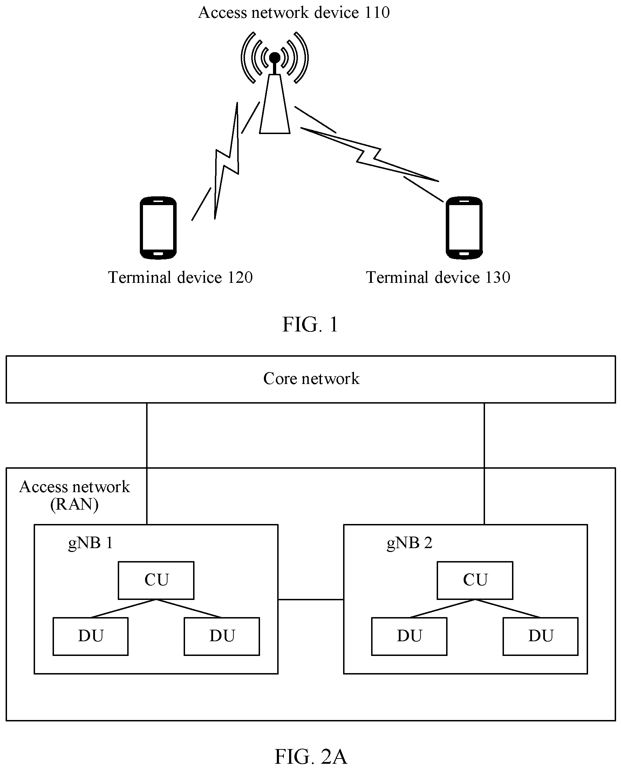

FIG. 1 shows a communication system. For example, the communication system includes an access network device 110 and two terminal devices: a terminal device 120 and a terminal device 130. At least one of the terminal device 120 and the terminal device 130 may send uplink data to the access network device 110, and the access network device 110 may receive the uplink data. The access network device may send downlink data to at least one of the terminal device 120 and the terminal device 130.

The following describes in detail the terminal devices and the access network device in FIG. 1.

(1) Access network device

An access network device may be a base station (base station, BS). The access network device may also be referred to as a network device, an access node (access node, AN), or a radio access node (radio access node, RAN). The access network device may be connected to a core network (for example, an LTE core network or a 5G core network). The access network device may provide a radio access service for the terminal device, and communicate with the terminal device over an air interface by using one or more cells. The access network device includes, for example, but is not limited to, at least one of the following: a next-generation NodeB (generation NodeB, gNB) in 5G, an access network device in an open radio access network (open radio access network, O-RAN) or a module included in the access network device, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission and reception point (transmission and reception point, TRP), a transmission point (transmission point, TP), a mobile switching center, and/or the like. Alternatively, the access network device may be a radio unit (radio unit, RU), a central unit (central unit, CU), a distributed unit (distributed unit, DU), a central unit control plane (CU control plane, CU-CP) node, or a central unit user plane (CU user plane, CU-UP) node. Alternatively, the access network device may be a relay station, an access point, an in-vehicle device, a wearable device, an access network device in a future evolved public land mobile network (public land mobile network, PLMN), or the like.

As shown in FIG. 2A, there are two gNBs on an access network side or referred to as a RAN side, where a gNB 1 and a gNB 2 are connected to a core network, and the gNB 1 and the gNB 2 may each include a CU and a DU. It may be understood that the CU and the DU are obtained through division of the access network device from a perspective of a logical function. The CU and the DU may be physically separated, or may be deployed together. A plurality of DUs may be centrally controlled by one CU, or one DU may be connected to a plurality of CUs. For example, an interface between the CU and the DU may be referred to as an F1 interface. For example, FIG. 2A shows a case in which two DUs in the gNB 1 (or the gNB 2) are centrally controlled by one CU.

In the present disclosure, a communication apparatus configured to implement a function of an access network device may be an access network device, or may be a network device having some functions of the access network device, or may be an apparatus that can support the access network device in implementing the function, for example, a chip system, a hardware circuit, a software module, or a combination of a hardware circuit and a software module. The apparatus may be installed in the access network device or used together with the access network device. In the method disclosed in the present disclosure, an example in which the communication apparatus configured to implement the function of the access network device is an access network device is used for description.

(2) Terminal device

The terminal device is also referred to as a terminal, a user equipment (user equipment, UE), a mobile station (mobile station, MS), a mobile terminal (mobile terminal, MT), or the like. The terminal device may be a device that provides voice and/or data connectivity for a user. The terminal device may communicate with one or more core networks via an access network device. The terminal device includes a handheld device having a wireless connection function, another processing device connected to a wireless modem, an in-vehicle device, or the like. The terminal device may be a portable, pocket-sized, handheld, computer built-in, or in-vehicle mobile apparatus. Examples of some terminal devices are: a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), a wireless network camera, a mobile phone (mobile phone), a tablet computer, a notebook computer, a palmtop computer, a mobile Internet device (mobile internet device, MID), a wearable device such as a smartwatch, a virtual reality (virtual reality, VR) device, an augmented reality (augmented reality, AR) device, a wireless terminal in industrial control (industrial control), a terminal in an Internet of Vehicles system, a wireless terminal in self driving (self driving), a wireless terminal in a smart grid (smart grid), a wireless terminal in transportation safety (transportation safety), a wireless terminal such as a smart fueler in a smart city (smart city), a terminal device on a high-speed railway, and wireless terminals in a smart home (smart home), such as a smart speaker, a smart coffee machine, and a smart printer.

In the present disclosure, a communication apparatus configured to implement a function of a terminal device may be a terminal device, or may be a terminal device having some functions of a terminal, or may be an apparatus that can support the terminal device in implementing the function, for example, a chip system. The apparatus may be installed in the terminal device or used together with the terminal device. In the present disclosure, the chip system may include a chip, or may include a chip and another discrete component. In the technical solutions provided in the present disclosure, an example in which the communication apparatus configured to implement the function of the terminal device is a terminal device or a UE is used for description.

(3) Protocol layer structure between an access network device and a terminal device

Communication between an access network device and a terminal device complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer (phy, PHY). For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and the terminal may further include an artificial intelligence (artificial intelligence, AI) layer, configured to transmit data related to an AI function.

Data transmission between the access network device and the terminal device is used as an example. Data transmission needs to pass through the user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Downlink data transmission is used as an example. After obtaining data from an upper layer, the PDCP layer transmits the data to the RLC layer and the MAC layer. The MAC layer generates a transport block, and then wireless transmission is performed through the physical layer. Data is encapsulated at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal device may further have an application layer and a non-access stratum. The application layer may be used to provide a service for an application installed on the terminal device. For example, downlink data received by the terminal device may be sequentially transmitted from the physical layer to the application layer, and then is provided by the application layer for the application. For another example, the application layer may obtain data generated by the application, sequentially transmit the data to the physical layer, and send the data to another communication apparatus. The non-access stratum may be configured to forward user data. For example, the non-access stratum forwards uplink data received from the application layer to the SDAP layer, or forwards downlink data received from the SDAP layer to the application layer.

(4) Structure of an access network device

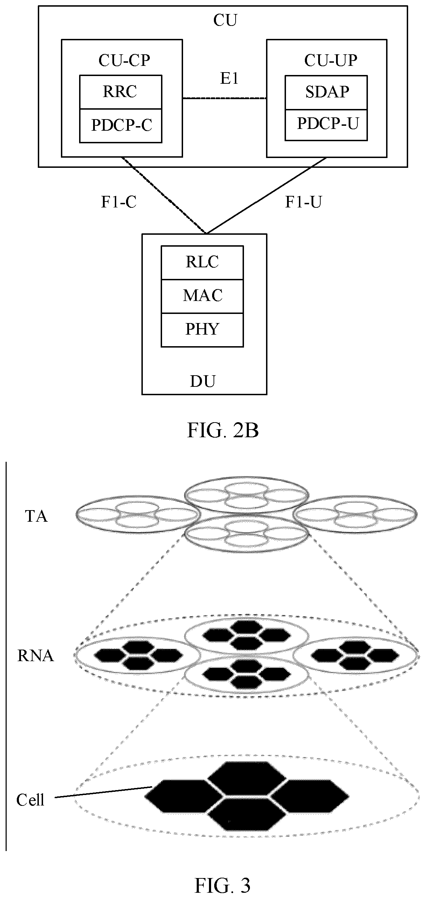

As shown in FIG. 2B, an access network device includes a central unit (central unit, CU) and a distributed unit (distributed unit, DU).

The CU and the DU may be defined based on protocol layers of a radio network. For example, functions of a PDCP layer and a protocol layer above the PDCP layer are set on the CU, and functions of a protocol layer (for example, an RLC layer, a MAC layer, and a PHY layer) below the PDCP layer are set on the DU. For example, functions of a protocol layer above the PDCP layer are set on the CU, and functions of the PDCP layer and a protocol layer below the PDCP layer are set on the DU. Alternatively, the CU and the DU may be defined in another manner. For example, the CU or the DU may have functions of more protocol layers through division. For another example, the CU or the DU may have some processing functions of the protocol layers through division. In a design, some functions of the RLC layer and functions of a protocol layer above the RLC layer are set on the CU, and remaining functions of the RLC layer and functions of a protocol layer below the RLC layer are set on the DU. In another design, division of functions of the CU or the DU may alternatively be performed based on service types or other system requirements. For example, division may be performed based on delays. Functions whose processing time needs to satisfy a delay requirement are set on the DU, and functions whose processing time does not need to satisfy the delay requirement are set on the CU. In another design, the CU may alternatively have one or more functions of a core network. For example, the CU may be disposed on a network side to facilitate centralized management. The DU may have a plurality of radio frequency functions, or the radio frequency functions may be set remotely. For example, FIG. 2B shows that functions of the PDCP layer, the RRC layer, and the SDAP layer are set on the CU, and functions of the RLC layer, the MAC layer, and the PHY layer are set on the DU.

Further, functions of the CU may be implemented by a same entity, or may be implemented by different entities. For example, FIG. 2B shows the functions of the CU may be further divided. To be specific, a control plane (control panel, CP) and a user plane (user panel, UP) are separated and implemented by different entities, which are a control plane CU entity (namely, a CU-CP entity) and a user plane CU entity (namely, a CU-UP entity). The CU-CP entity and the CU-UP entity may be coupled to the DU, to jointly complete functions of the access network device. Based on this, when the PDCP layer is set on the CU, the PDCP layer may be classified into a PDCP-C and a PDCP-U. In a possible manner, the CU-CP is responsible for a control plane function. As shown in FIG. 2B, the CU-CP mainly includes the RRC and the PDCP-C. The PDCP-C is mainly responsible for data encryption and decryption, integrity protection, data transmission, and the like on the control plane. The CU-UP is responsible for a user plane function. As shown in FIG. 2B, the CU-UP mainly includes the SDAP and the PDCP-U. The SDAP is mainly responsible for processing data of the core network and mapping a data flow (flow) to a bearer. PDCP-U is responsible for data plane encryption and decryption, integrity protection, header compression, sequence number maintenance, data transmission, and the like. The CU-CP and the CU-UP are connected through an E1 interface. On behalf of the access network device, the CU-CP is connected to the core network through an Ng interface, and the CU-CP is connected to the DU through a control plane interface such as F1-C. The CU-UP is connected to the DU through a user plane interface such as F1-U.

In the foregoing architecture, signaling generated by the CU may be sent to a terminal device through the DU, or signaling generated by a terminal device may be sent to the CU through the DU. For example, signaling at the RRC layer or PDCP layer is finally processed as signaling at the physical layer and sent to the terminal device, or is converted from signaling received from the physical layer. In this architecture, the signaling at the RRC layer or the PDCP layer may be considered to be sent through the DU.

Optionally, any one of the DU, the CU, the CU-CP, and the CU-UP may be a software module, a hardware structure, or a combination of a software module and a hardware structure. This is not limited. Different entities may exist in different forms. This is not limited. The modules and methods performed by the modules also fall within the protection scope of the present disclosure.

It should be understood that a quantity and types of devices in the communication system shown in FIG. 1 are merely used as an example, and the present disclosure is not limited thereto. In actual application, the communication system may further include more terminal devices and more access network devices, and may further include another network element, for example, may include a core network device and/or a network element configured to implement an artificial intelligence function.

In the foregoing communication system, when the terminal device does not transmit data, the terminal device enters an idle (IDLE) state or an inactive (INACTIVE) state. In the two states, the terminal device and the access network device are disconnected. If the network side needs to send a signal to the terminal device, the access network device needs to first find the terminal device via a paging (paging) message, and then establish a connection to the terminal device to transmit the signal. When the terminal device is in the idle state or the inactive state, the terminal device needs to wake up at a specific location in a specific cycle, to monitor paging on the terminal device by the network side. In other time, the terminal device sleeps to save power.

In a conventional technology, when the terminal device is in the idle state, the core network performs paging in all cells in a TA with which the terminal device registers in the core network; or when the terminal device is in the inactive state, the access network device needs to perform paging in all cells in a configured RNA. It may be understood that the access network device is an access network device to which a last serving cell (last serving cell) accessed by the terminal device in a connected state belongs. The access network device may also be referred to as a last serving base station (last serving gNB) or an anchor base station.

Specifically, the TA is a concept set for location management of the terminal device in a communication system (for example, LTE or NR). When the terminal device registers with and accesses a network, the core network configures a UE registration area (UE registration area) for the terminal device. The UE registration area includes a tracking area identity (tracking area identity, TAI) list, and the TAI list is used to mark a TA registered by the terminal device in the core network. Certainly, the TA is not fixed. When the terminal device moves to a cell that does not belong to the TA identified by the TAI list, the terminal device actively accesses the network, and performs NAS registration update (NAS registration update). The core network records a current location of the terminal device and updates the UE registration area corresponding to the terminal device, that is, indicates, to the terminal device again, a TAI list including a TA of a cell in which the terminal device is currently located.

The RNA is a paging range that is set for the terminal device in the inactive state and that is smaller than the TA range to reduce paging message transmission overheads. Refer to FIG. 3. It may be understood that the TA may include a plurality of RNAs, and one RNA may include a plurality of cells. The RNA corresponding to the terminal device may be configured and managed by the access network device, and the access network device may page the terminal device based on the RNA corresponding to the terminal device. Similarly, the RNA is not fixed, and the terminal device may initiate an RNA update procedure when moving to a cell that does not belong to the RNA; or the terminal device may periodically initiate the RNA update procedure.

The following describes in detail a paging procedure in the conventional technology.

When the terminal device is in the idle state, the core network sends a paging message to access network devices in all TAs identified by the TAI list corresponding to the terminal device. The paging message carries an identifier of the terminal device, for example, an international mobile subscriber identity (international mobile subscriber identity, IMSI) or an S-temporary mobile subscriber identity (S-temporary mobile subscriber identity, S-TMSI). The access network devices generate radio resource control (radio resource control, RRC), and transparently transmit the paging message to terminal devices in cells managed by the access network devices. If the terminal device that obtains the paging message through monitoring determines that the paging message carries the identifier of the terminal device, the terminal device initiates an RRC connection setup request to connect to a corresponding access network device. If the terminal device that obtains the paging message through monitoring determines that the paging message does not carry the identifier of the terminal device, the terminal device ignores the paging message.

When the terminal device is in the inactive state, the access network device may perform RAN paging on the UE in the inactive state based on the RNA. To be specific, the access network device may send the paging message in all cells in the RNA in which the terminal device is currently located, where the paging message carries an I-radio network temporary identifier (I-radio network temporary identifier, I-RNTI) of the terminal device. If the current RNA area of the terminal device includes a cell managed by a base station other than the anchor base station, the anchor base station sends the paging message to the base station through an Xn interface. After obtaining the paging message through monitoring, the terminal device checks whether the paging message includes the I-RNTI of the terminal device. If determining that the paging message includes the I-RNTI of the terminal device, the terminal device initiates an RRC resume request to connect to the corresponding access network device. If the terminal device that obtains the paging message through monitoring determines that the paging message does not include the identifier of the terminal device, the terminal device ignores the paging message.

The terminal device in the idle state or the inactive state may monitor the paging message in a discontinuous reception (discontinuous reception, DRX) manner, to reduce power consumption. The terminal device in the idle state monitors paging information initiated by the core network on a paging control channel (paging control channel, PCCH), and the terminal device in the inactive state monitors paging information initiated by the access network device on the PCCH. Paging occasions of the access network device and the core network may overlap, and the access network device and the core network may use a same paging mechanism. A terminal device monitors a paging message at a fixed time domain position of the terminal device in each DRX cycle. Specifically, the fixed time domain position of the terminal device is related to an identifier of the terminal device. For example, the terminal device in the idle state may calculate the fixed time domain position based on an S-TMSI of the terminal device and a formula agreed in a protocol. For another example, the terminal device in the inactive state may calculate the fixed time domain position based on an I-RNTI of the terminal device and a formula agreed in a protocol.

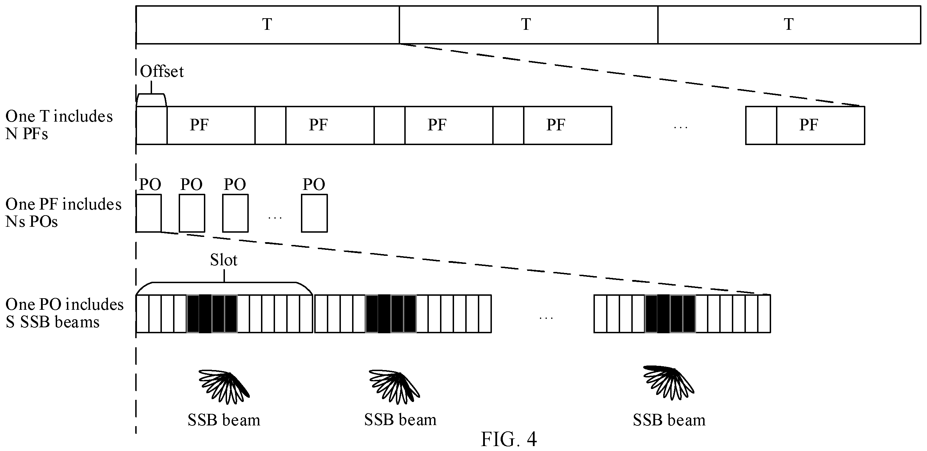

A fixed time domain position at which the terminal device monitors the paging message in a DRX cycle may be specifically represented by using a paging frame (paging frame, PF) and a paging occasion (paging occasion, PO). Refer to FIG. 4. The PO is a PDCCH blind detection occasion set used to monitor the paging message. One PO includes S slots, and a value of S is a quantity of beams (beams) corresponding to an SSB of the access network device. In other words, one PO includes S SSB beams. The terminal device monitors the paging message based on an SSB beam sweeping mechanism. To be specific, the terminal device monitors the paging message in a beam direction in a slot in a PO. The PF is a radio frame including the paging message, and includes a start location of the PO. One PF includes one or more POs. However, when a PO includes a large quantity of SSB beams, one PF may include less than one PO, and another part of the PO may be in a subsequent PF. For example, FIG. 4 shows that one PF includes Ns POs. One DRX cycle (denoted as T) includes N PFs, and there is an offset PF_offset between every two PFs of the N PFs.

It can be learned from the foregoing description that a paging range in the conventional technology relates to a plurality of cells, and the terminal device needs to sweep all beams in the cells. Such a paging method requires a long time, and efficiency is low.

Based on this, the present disclosure provides a paging method and a communication apparatus, to determine, by predicting a location of a terminal device, a target cell for paging, narrowing a paging range and improving paging efficiency.

In the present disclosure, the location of the terminal device may be predicted based on artificial intelligence (artificial Intelligence, AI). AI may be implemented by using various possible technologies, for example, by using a machine learning technology. In the present disclosure, the foregoing communication system may further include a network element for implementing an artificial intelligence function. For example, an AI function (for example, an AI module or an AI entity) may be configured in an existing network element in the communication system to implement an AI-related operation. The AI-related operation may also be referred to as an AI function. For example, the existing network element may be an access network device (for example, a gNB), a terminal device, a device (or referred to as a network element) in a core network, a network management system, or the like. The network management system may classify network management work into three types based on an actual requirement of network operation of an operator: operations (Operations), administration (Administration), and maintenance (Maintenance). The network management system may also be referred to as an operations, administration and maintenance (operations, administration and maintenance, OAM) network element, OAM for short. The operations mainly refer to analysis, prediction, planning, and configuration for routine networks and services. Maintenance mainly refers to routine operation activities such as network and service tests and fault management. The network management system can detect a network running status, optimize network connections and performance, improve network running stability, and reduce network maintenance costs. Alternatively, an independent network element may be introduced into the communication system to perform an AI-related operation. The independent network element may be referred to as an AI network element, an AI node, or the like. The name is not limited in the present disclosure. The AI network element may be directly connected to the access network device in the communication system, or may be indirectly connected to the access network device through a third-party network element. The third-party network element may be a network element in a core network, such as an authentication management function (authentication management function, AMF) network element, a user plane function (user plane function, UPF) network element, an OAM, a cloud server, or another network element. This is not limited. A network element that performs an AI-related operation is a network element with a built-in AI function, or is the AI network element. This is not limited in the present disclosure. The present disclosure is described below by using an example in which an AI function is built in an existing network element.

For ease of understanding, the following first describes some terms of AI in the present disclosure with reference to A1 to A4. It may be understood that the descriptions are not intended to limit the present disclosure.

A1: AI model

The AI model is a specific implementation of an AI function. The AI model represents a mapping relationship between an input and an output of a model. The AI model may be a neural network, a linear regression model, a decision tree model, a support vector machine (support vector machine, SVM), a Bayesian network, a Q learning model, or another machine learning model. In the present disclosure, the AI function may include at least one of the following: data collection (collection of training data and/or inference data), data preprocessing, model training (or referred to as model learning), model information release (configuration of model information), model verification, model inference, or inference result release. Inference may also be referred to as prediction. In the present disclosure, the AI model may be referred to as a model for short.

In a conventional communication system, rich expertise is required to design a communication module. However, in a deep learning communication system based on a machine learning technology (for example, a neural network), an implicit pattern structure may be automatically discovered from a large quantity of datasets and a mapping relationship between data may be established, to obtain performance better than that of a conventional modeling method.

A2: Neural network

The neural network is a specific implementation form of an AI or machine learning technology. According to a universal approximation theorem, the neural network can theoretically approximate to any continuous function, so that the neural network can learn any mapping.

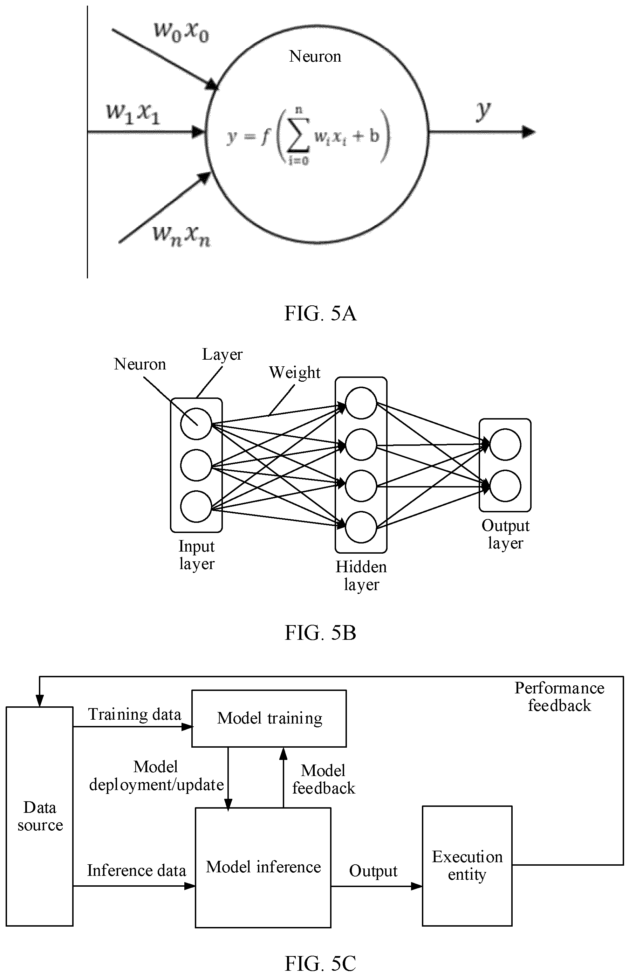

An idea of the neural network is from a neuron structure of brain tissue. For example, each neuron performs a weighted summation operation on input values of the neuron, and outputs an operation result by using an activation function. FIG. 5A is a diagram of a neuron structure. It is assumed that inputs of a neuron are $x = [x_0, x_1, \ldots, x_n]$, and weights corresponding to the inputs are respectively $w = [w, w_1, \ldots, w_n]$, where $w_i$ is used as a weight of $x_i$, and is used to weight $x_i$. An offset for performing weighted summation on the input values based on the weights is, for example, b. There may be a plurality of forms of the activation function. Assuming that an activation function of a neuron is $y = f(z) = \max(0, z)$, an output of the neuron is $y = f\left(\sum_{i=0}^{i=n} w_i * x_i + b\right) = \max\left(0, \sum_{i=0}^{i=n} w_i * x_i + b\right)$. For another example, if an activation function of a neuron is y = *f(z)* = *z* , an output of the neuron is $y = f\left(\sum_{i=0}^{i=n} w_i * x_i + b\right) = \sum_{i=0}^{i=n} w_i * x_i + b$ . *b, $w_i$,* and *$x_i$* may be various possible values such as a decimal, an integer (for example, 0, a positive integer, or a negative integer), and a complex number. Activation functions of different neurons in the neural network may be the same or different.

The neural network generally includes a plurality of layers, and each layer may include one or more neurons. A depth and/or a width of the neural network are/is increased, so that an expression capability of the neural network can be improved, and a more powerful information extraction and abstraction modeling capability can be provided for a complex system. The depth of the neural network may be a quantity of layers included in the neural network, and a quantity of neurons included in each layer may be referred to as a width of the layer. In an implementation, the neural network includes an input layer and an output layer. The input layer of the neural network performs neuron processing on received input information, and transfers a processing result to the output layer, and the output layer obtains an output result of the neural network. In another implementation, the neural network includes an input layer, a hidden layer, and an output layer. Refer to FIG. 5B. The input layer of the neural network performs neuron processing on received input information, and transfers a processing result to an intermediate hidden layer. The hidden layer performs calculation on the received processing result to obtain a calculation result. The hidden layer transfers the calculation result to the output layer or an adjacent hidden layer. Finally, the output layer obtains an output result of the neural network. One neural network may include one hidden layer, or include a plurality of hidden layers that are sequentially connected. This is not limited.

The neural network in the present disclosure is, for example, a deep neural network (deep neural network, DNN). Based on a network construction manner, the DNN may include a feedforward neural network (feedforward neural network, FNN), a convolutional neural network (convolutional neural network, CNN), and a recurrent neural network (recurrent neural network, RNN).

A3: Training data and inference data

The training data may include an input of the AI model or include an input of the AI model and a target output (label), and is used for training the AI model. For example, the training data includes a plurality of training samples, and each training sample is one input of the neural network. The training data may also be understood as a set of training samples, or referred to as a training dataset. The training dataset is one of important parts of machine learning. In essence, model training is to learn some features from the training data, so that an output of the AI model is as close as possible to the target output, for example, a difference between the output of the AI model and the target output is minimized. The target output may also be referred to as a label. The composition and selection of the training dataset can determine performance of the trained AI model to some extent.

In addition, a loss function may be defined in a training process of the AI model (for example, a neural network). The loss function describes a gap or difference between an output value of the AI model and a target output value. A specific form of the loss function is not limited in the present disclosure. The training process of the AI model is a process in which a parameter of the AI model is adjusted, so that a value of the loss function is less than a threshold, or a value of the loss function meets a target requirement. For example, the AI model is a neural network, and adjusting a parameter of the neural network includes adjusting at least one of the following parameters: a quantity of layers and a width of the neural network, a weight of a neuron, or a parameter in an activation function of a neuron.

The inference data may be used as an input of a trained AI model for AI model inference. During model inference, the inference data is input into the AI model, to obtain a corresponding output, that is, an inference result.

A4: AI model design

The AI model design mainly includes a data collection phase (for example, collection of training data and/or inference data), a model training phase, and a model inference phase. Further, an inference result application phase may be included. FIG. 5C shows an AI application framework. In the foregoing data collection phase, a data source (data source) is used to provide training data and inference data. In the model training phase, the training data (training data) provided by the data source is analyzed or trained to obtain an AI model. The AI model represents a mapping relationship between an input and an output of the model. Obtaining an AI model through learning by using a model training node is equivalent to obtaining the mapping relationship between the input and the output of the model through learning by using the training data. In the model inference phase, the AI model trained in the model training phase is used to perform inference based on the inference data provided by the data source, to obtain the inference result. This phase may also be understood as follows: The inference data is input into the AI model, to obtain the output through the AI model. The output is the inference result. The inference result may indicate a configuration parameter used (acted) by an execution object, and/or an operation performed by the execution object. The inference result is released in the inference result application phase. For example, the inference result may be planned by an execution (actor) entity in a unified manner. For example, the execution entity may send the inference result to one or more execution objects (for example, a core network device, an access network device, or a terminal device) for execution. For another example, the execution entity may further feed back performance of the model to the data source, to facilitate subsequent model update training.

The following further describes in detail the paging method provided in the present disclosure by using Solution 1 and Solution 2.

Solution 1

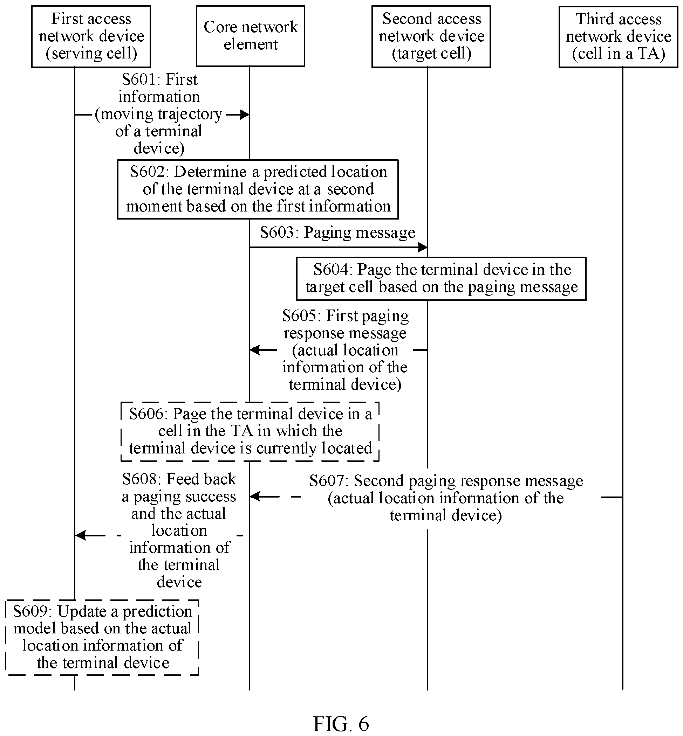

FIG. 6 is a schematic flowchart of a paging method. The method includes the following procedure.

S601: A first access network device sends first information to a core network element, where the first information indicates a moving trajectory of a terminal device.

Specifically, the first access network device is an access network device that provides a service for the terminal device before a first moment. For example, the first access network device is an access network device that last provides a service for the terminal before the first moment, namely, an anchor base station. In other words, the first access network device is an access network device to which a last serving cell of the terminal device before the first moment belongs. The first moment is a moment at which the terminal device changes from a connected state to a non-connected state or an inactive state, or may be understood as a moment at which the terminal device is disconnected from the first access network device. The moving trajectory of the terminal device includes N1 historical locations of the terminal device before the first moment and/or N2 predicted locations of the terminal device after the first moment, where N1 and N2 are positive integers.

Optionally, a location of the terminal device described in the present disclosure may be represented by using geographical location information, for example, geographical location information such as a longitude, a latitude, and a height of the terminal device.

Optionally, the first access network device may include the first information in a context release message of the terminal device, and send the context release message of the terminal device to a core network element. The core network element may be an AMF network element or another network element.

Certainly, it may be understood that the first access network device needs to determine the first information before sending the first information. The following describes two optional implementations in which the first access network device determines the first information.

In an optional implementation, before being disconnected from the terminal device, the first access network device may obtain a historical moving trajectory of the terminal device, for example, the foregoing N1 historical locations of the terminal device before the first moment. It may be understood that when reporting the N1 historical locations corresponding to the historical moving trajectory, the terminal device may indicate time corresponding to each historical location.

The first access network device may determine the first information based on the obtained historical moving trajectory of the terminal device. For example, the first access network device may indicate the historical moving trajectory of the terminal device by using the first information. For another example, the first access network device may predict a future moving trajectory of the terminal device based on the historical moving trajectory of the terminal device, for example, determine the N2 predicted locations of the terminal device after the first moment. In this way, the first access network device may indicate the historical moving trajectory and the future moving trajectory of the terminal device by using the first information. For another example, when the first access network device obtains the future moving trajectory of the terminal device through prediction, the first information may indicate only the future moving trajectory of the terminal device. Optionally, the first access network device may determine, based on the N1 historical locations of the terminal device before the first moment and an AI model used to predict the location of the terminal device, the N2 predicted locations of the terminal device after the first moment. For ease of description, in the following content in the present disclosure, the AI model used to predict the location of the terminal is referred to as a prediction model for short.

In another optional implementation, the terminal device has a prediction capability. For example, the terminal device may derive (predict) a future moving trajectory of the terminal device based on the historical moving trajectory of the terminal device by using the prediction model. The first access network device may obtain the moving trajectory of the terminal device before being disconnected from the terminal device. The moving trajectory includes the historical moving trajectory of the terminal device and the future moving trajectory predicted by the terminal device. It may be understood that when reporting the N1 historical locations corresponding to the historical moving trajectory and the N2 predicted locations corresponding to the future moving trajectory, the terminal device may indicate time corresponding to each location.

The first access network device may determine the first information based on the obtained moving trajectory of the terminal device. For example, the first access network device may determine the moving trajectory of the terminal device that is obtained as indicated by the first information. For another example, the first access network device may indicate, by using only the first information, the future moving trajectory predicted by the terminal device. For another example, the first access network device may further predict the future moving trajectory of the terminal device based on the historical moving trajectory of the terminal device. In this way, the historical moving trajectory of the terminal device and the future moving trajectory that is of the terminal device and that is predicted by the first access network device are indicated by the first information. Certainly, the first access network device may indicate the historical moving trajectory of the terminal device by using only the first information. This is not limited in this embodiment of this application.

S602: The core network element determines a predicted location of the terminal device at a second moment based on the first information.

In an optional implementation, when the first information indicates that the moving trajectory of the terminal device includes a historical moving trajectory, for example, the N1 historical locations of the terminal device before the first moment, the core network element may determine the predicted location of the terminal device at the second moment based on the N1 historical locations of the terminal device before the first moment. Optionally, the core network element may derive (predict) the predicted location of the terminal device at the second moment based on the N1 historical locations of the terminal device by using the prediction model.

In another optional implementation, when the first information indicates that the moving trajectory of the terminal device includes a future moving trajectory, for example, the N2 predicted locations of the terminal device after the first moment, the core network element may determine the predicted location of the terminal device at the second moment from the N2 predicted locations.

It may be understood that the second moment described above is later than the first moment.

S603: The core network element sends a paging message to a second access network device at the second moment.

The predicted location of the terminal device at the second moment is in a target cell, and the second access network device is an access network device to which the target cell belongs. Optionally, the target cell may also be described as a paging cell, and is a cell range in which the terminal device is paged.

It may be understood that if a last serving cell of the terminal device before the first moment and the target cell belong to a same access network device, the first access network device and the second access network device are a same access network device; or if the last serving cell of the terminal device before the first moment and the target cell belong to different access network devices, the first access network device and the second access network device are different access network devices.

Specifically, the paging message includes information indicating the target cell. Further, optionally, if the core network element can determine an SSB beam distribution status of the target cell, the core network element may further determine, based on the first information, that the terminal device is located in a coverage range of a target beam in the target cell at the second moment, and the core network element may further add, to the paging message, information indicating the target beam. Alternatively, if the core network element cannot determine an SSB beam distribution status of the target cell, the core network element may further send second information to the second access network device when sending the paging message. The second information indicates future predicted locations of the terminal device, for example, the N2 predicted locations of the terminal device after the first moment. In this way, the second access network device can determine, based on the second information, a coverage range of a beam in the target cell to which the predicted location of the terminal device at the second moment belongs, and determine the beam as the target beam.

S604: The second access network device pages the terminal device in the target cell based on the paging message.

In an optional implementation, if the paging message includes the information indicating the target beam, the second access network device may specifically initiate paging on the terminal device within the coverage range of the target beam in the target cell, for example, forward the paging message sent by the core network element to all terminal devices within the coverage range of the target beam. Alternatively, the core network element may generate, based on the paging message sent by the core network element, signaling that can be exchanged with the terminal device, and deliver the signaling to all terminal devices within the coverage range of the target beam.

In another optional implementation, if the paging message does not include the information indicating the target beam, the second access network device needs to initiate paging on the terminal device in a coverage range of all beams in the target cell, for example, forward the paging message sent by the core network element to all terminal devices in the target cell. Alternatively, the core network element may generate, based on the paging message sent by the core network element, signaling that can be exchanged with the terminal device, and deliver the signaling to all terminal devices in the target cell.

Alternatively, if the paging message does not include the information indicating the target beam, but the second access network device obtains the second information described in S603, the second access network device may determine the target beam based on the N2 predicted locations indicated by the second information. The second access network device may specifically initiate paging on the terminal device within the coverage range of the target beam in the target cell, for example, forward the paging message sent by the core network element to all terminal devices within the coverage range of the target beam. Alternatively, the core network element may generate, based on the paging message sent by the core network element, signaling that can be exchanged with the terminal device, and deliver the signaling to all terminal devices within the coverage range of the target beam.

S605: The second access network device sends a first paging response message to the core network element.

The first paging response message indicates a paging result of paging the terminal device in the target cell. In a possible case, the first paging response message indicates that the terminal device is successfully paged. In another possible case, the first paging response message indicates that the terminal device fails to be paged.

Optionally, when the first paging response message indicates that the terminal device is successfully paged, the second access network device may notify the core network element of a beam that is actually accessed by the terminal device in the target cell, an actual location of the terminal device when the paging succeeds, an actual location of the terminal device before the paging succeeds, and the like. For example, the second access network device may include actual location information of the terminal device in the first paging response message, and the actual location information in the first paging response message may also be described as third information. The third information indicates one or more of the following: a beam over which the terminal device accesses the target cell; location information of the terminal device when the paging succeeds; and location information of the terminal device before the paging succeeds.

Optionally, the third information or content indicated by the third information may be used to update the prediction model described in S601 or S602. This design can improve prediction accuracy. In a possible implementation, an updated prediction model may be used to predict a location of the terminal device after the paging succeeds. In this implementation, it may be understood that the third information is used to predict the location of the terminal device after the paging succeeds.

Further, optionally, when the first paging response message indicates that the terminal device is successfully paged, S608 and S609 may continue to be performed after S605. When the first paging response message indicates that the terminal device fails to be paged, S606 to S609 need to be performed after S605. As optional steps, S606 to S709 are shown by using dashed lines in FIG. 6.

S606: The core network element pages the terminal device in a cell, other than the target cell, in a TA in which the terminal device is currently located.

Specifically, for this step, refer to the paging procedure triggered by the core network when the terminal device is in the inactive state in the conventional technology. Details are not described in the present disclosure.

It is assumed that the terminal device is successfully paged in a cell in the TA in which the terminal device is currently located, and an access network device to which the cell belongs is denoted as a third access network device. The third access network device may feed back paging success related information to the core network element. Specifically, it may be understood as described in S607.

S607: The third access network device sends a second paging response message to the core network element, where the second paging response message indicates that the terminal device is successfully paged in the cell managed by the third access network device.

Optionally, the third access network device may notify the core network element of a cell that is actually accessed by the terminal device, a beam that is actually accessed by the terminal device in the cell, an actual location when the paging succeeds, an actual location before the paging succeeds, and the like. For example, the third access network device may include actual location information of the terminal device in the second paging response message, and the actual location information of the terminal device in the second paging response message may also be described as fourth information. The fourth information may indicate one or more of the following: a cell accessed by the terminal device, a beam over which the terminal device accesses a cell, location information of the terminal device when the paging succeeds, and location information of the terminal device before the paging succeeds.

Optionally, the fourth information or content indicated by the fourth information may be used to update the prediction model described in S601 or S602. This design can improve prediction accuracy. In a possible implementation, an updated prediction model may be used to predict a location of the terminal device after the paging succeeds. In this implementation, it may be understood that the fourth information is used to predict the location of the terminal device after the paging succeeds.

S608: The core network element feeds back, to the first access network device, that the terminal device is successfully paged and actual location information of the terminal device. If S605 is performed, the actual location information fed back by the core network element is the actual location information included in the first paging response message described in S605, or is referred to as the third information; or if S607 is performed, the actual location information fed back by the core network element is the actual location information included in the second paging response message described in S607, or is referred to as the fourth information.

S609: The first access network device updates the prediction model based on the actual location information of the terminal device.

For example, when the first access network device derives, by using the prediction model, the N2 predicted locations of the terminal device after the first moment, if the first paging response message indicates that the terminal device is successfully paged, the first access network device may perform, based on the content indicated by the third information, reinforcement learning on the prediction model used by the first access network device, to update the prediction model. Alternatively, if the first paging response message indicates that the terminal device fails to be paged, and the second paging response message indicates that the terminal device is successfully paged, the first access network device may perform, based on the content indicated by the fourth information, reinforcement learning on the prediction model used by the first access network device, to update the prediction model.

In a possible implementation, the first access network device predicts, based on the actual location information (the third information or the fourth information) of the terminal device, the location of the terminal device after the paging succeeds. To be specific, the first access network device first updates the prediction model based on the actual location information of the terminal device, and then predicts, by using an updated prediction model, the location of the terminal device after the paging succeeds.

Similarly, it may be understood that, in S602, if the core network element derives (predicts) the predicted location of the terminal device at the second moment based on the N1 historical locations of the terminal device by using the prediction model, the core network element may also update the prediction model based on the actual location information (the third information or the fourth information) of the terminal device. Further, optionally, the core network element may also predict, by using an updated prediction model, the location of the terminal device after the paging succeeds.

In Solution 1 provided in the present disclosure, the historical trajectory information and the predicted trajectory information of the terminal device are introduced, to assist the core network in selecting the target cell (or referred to as the paging cell) for more accurately paging the terminal device. This can reduce signaling overheads and a delay that are related to paging, and improve paging efficiency and accuracy. In addition, the prediction model is updated based on the actual location information of the terminal device that is successfully paged, so that accuracy of predicting a trajectory of the terminal device can be improved. In a possible design, Solution 1 above may be used in a scenario in which a terminal device in an idle state is paged.

Solution 2

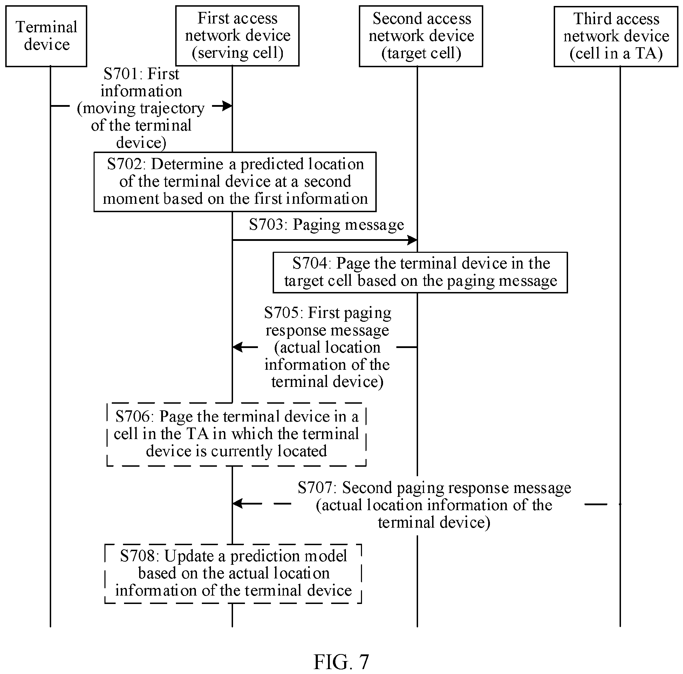

FIG. 7 is a schematic flowchart of a paging method. The method includes the following procedure.

S701: A terminal device sends first information to a first access network device, where the first information indicates a moving trajectory of the terminal device.

Specifically, the first access network device is an access network device that last provides a service for the terminal device before a first moment. In other words, the first access network device is an access network device to which a last serving cell of the terminal device before the first moment belongs. The first moment is a moment at which the terminal device changes from a connected state to a non-connected state or an inactive state, or may be understood as a moment at which the terminal device is disconnected from the first access network device. The moving trajectory of the terminal device includes N1 historical locations of the terminal device before the first moment and/or N2 predicted locations of the terminal device after the first moment, where N1 and N2 are positive integers.

Optionally, a location of the terminal device described in the present disclosure may be represented by using geographical location information, for example, geographical location information such as a longitude, a latitude, and a height of the terminal device.

Certainly, it may be understood that the terminal device needs to determine the first information before sending the first information. The following describes two optional implementations in which the terminal device determines the first information.

In an optional implementation, before being disconnected from the first access network device, the terminal device may report a historical moving trajectory of the terminal device to the first access network device. In this case, the first information sent by the terminal device indicates the N1 historical locations of the terminal device before the first moment.

In another optional implementation, the terminal device has a prediction capability. For example, the terminal device may derive (predict) a future moving trajectory of the terminal device based on the historical moving trajectory of the terminal device by using a prediction model. Before being disconnected from the first access network device, the terminal device may report the historical moving trajectory and the future moving trajectory of the terminal device to the first access network device. In this case, the first information sent by the terminal device indicates the N1 historical locations of the terminal device before the first moment and the N2 predicted locations of the terminal device after the first moment. Alternatively, before being disconnected from the first access network device, the terminal device may report the future moving trajectory of the terminal device to the first access network device. For example, the first information sent by the terminal device indicates the N2 predicted locations of the terminal device after the first moment.

It may be understood that when reporting the N1 historical locations corresponding to the historical moving trajectory and/or the N2 predicted locations corresponding to the future moving trajectory, the terminal device may indicate time corresponding to each location.

S702: The first access network device determines a predicted location of the terminal device at a second moment based on the first information.

In an optional implementation, when the first information indicates that the moving trajectory of the terminal device includes a historical moving trajectory, for example, the N1 historical locations of the terminal device before the first moment, the first access network device may determine the predicted location of the terminal device at the second moment based on the N1 historical locations of the terminal device before the first moment. Optionally, the first access network device may derive (predict) the predicted location of the terminal device at the second moment based on the N1 historical locations of the terminal device by using the prediction model.

In another optional implementation, when the first information indicates that the moving trajectory of the terminal device includes a future moving trajectory, for example, the N2 predicted locations of the terminal device after the first moment, the first access network device may determine the predicted location of the terminal device at the second moment from the N2 predicted locations.

It may be understood that the second moment described above is later than the first moment.

In addition, the predicted location of the terminal device at the second moment is in a target cell. In a possible case, the target cell is not a cell managed by the first access network device. In another possible case, the target cell is a cell managed by the first access network device. In Solution 2, an example in which the target cell is not a cell managed by the first access network device is used for description of subsequent steps. For ease of differentiation, an access network device to which the target cell belongs is denoted as a second access network device below for description.

S703: The first access network device sends a paging message to the second access network device at the second moment.

Specifically, the paging message includes information indicating the target cell. Further, optionally, if the first access network device can determine an SSB beam distribution status of the target cell, the first access network device may further determine, based on the first information, that the terminal device is located in a coverage range of a target beam in the target cell at the second moment, and the first access network device may further add, to the paging message, information indicating the target beam. Alternatively, if the first access network device cannot determine an SSB beam distribution status of the target cell, the first access network device may further send second information to the second access network device when sending the paging message. The second information indicates future predicted locations of the terminal device, for example, the N2 predicted locations of the terminal device after the first moment. In this way, the second access network device can determine, based on the second information, a coverage range of a beam in the target cell to which the predicted location of the terminal device at the second moment belongs, and determine the beam as the target beam.

S704: The second access network device pages the terminal device in the target cell based on the paging message.

Specifically, refer to S604 for implementation. Details are not described again in the present disclosure.

S705: The second access network device sends a first paging response message to the first access network device.

The first paging response message indicates a paging result of paging the terminal device in the target cell. In a possible case, the first paging response message indicates that the terminal device is successfully paged. In another possible case, the first paging response message indicates that the terminal device fails to be paged.

Optionally, when the first paging response message indicates that the terminal device is successfully paged, the second access network device may notify the first access network device of a beam that is actually accessed by the terminal device in the target cell, an actual location of the terminal device when the paging succeeds, an actual location of the terminal device before the paging succeeds, and the like. For example, the second access network device may include actual location information of the terminal device in the first paging response message, and the actual location information of the terminal device in the first paging response message may also be described as third information. The third information indicates one or more of the following: a beam over which the terminal device accesses the target cell; location information of the terminal device when the paging succeeds; and location information of the terminal device before the paging succeeds.

Optionally, the third information or content indicated by the third information may be used to update the prediction model described in S701 or S702. This design improves prediction accuracy. In a possible implementation, an updated prediction model may be used to predict a location of the terminal device after the paging succeeds. In this implementation, it may be understood that the third information is used to predict the location of the terminal device after the paging succeeds.

Further, optionally, when the first paging response message indicates that the terminal device is successfully paged, S708 may continue to be performed after S705. When the first paging response message indicates that the terminal device fails to be paged, S706 to S708 need to be performed after S705. As optional steps, S706 to S708 are shown by using dashed lines in FIG. 7.

S706: The first access network device pages the terminal device in a cell, other than the target cell, in a TA in which the terminal device is currently located.

Specifically, for this step, refer to the paging procedure triggered by the access network device (anchor base station) when the terminal device is in the inactive state in the conventional technology. A paging range of the first access network device may be specifically a cell included in an RNA configured in the TA. Details are not described in the present disclosure.

It is assumed that the terminal device is successfully paged in a cell in the TA in which the terminal device is currently located, and an access network device to which the cell belongs is denoted as a third access network device. The third access network device may feed back paging success related information to the core network element. Specifically, it may be understood as described in S607.

S707: The third access network device sends a second paging response message to the first access network device, where the second paging response message indicates that the terminal device is successfully paged in the cell managed by the third access network device. Optionally, the third access network device may notify the first access network device of a cell that is actually accessed by the terminal device, a beam that is actually accessed by the terminal device in the cell, an actual location when the paging succeeds, an actual location before the paging succeeds, and the like. For example, the third access network device may include actual location information of the terminal device in the second paging response message, and the actual location information of the terminal device in the second paging response message may also be described as fourth information. The fourth information may indicate one or more of the following: a cell accessed by the terminal device, a beam over which the terminal device accesses a cell, location information of the terminal device when the paging succeeds, and location information of the terminal device before the paging succeeds.

Optionally, content indicated by the fourth information may be used to update the prediction model described in S701 or S702. This design improves prediction accuracy. In a possible implementation, an updated prediction model may be used to predict a location of the terminal device after the paging succeeds. In this implementation, it may be understood that the fourth information is used to predict the location of the terminal device after the paging succeeds.

S708: The first access network device updates the prediction model based on the actual location information of the terminal device.

For example, when the first access network device derives, by using the prediction model, the N2 predicted locations of the terminal device after the first moment, if the first paging response message indicates that the terminal device is successfully paged, the first access network device may perform, based on the content indicated by the third information, reinforcement learning on the prediction model used by the first access network device, to update the prediction model. Alternatively, if the first paging response message indicates that the terminal device fails to be paged, and the second paging response message indicates that the terminal device is successfully paged, the first access network device may perform, based on the content indicated by the fourth information, reinforcement learning on the prediction model used by the first access network device, to update the prediction model.

In a possible implementation, the first access network device predicts, based on the actual location information (the third information or the fourth information) of the terminal device, the location of the terminal device after the paging succeeds. To be specific, the first access network device first updates the prediction model based on the actual location information of the terminal device, and then predicts, by using an updated prediction model, the location of the terminal device after the paging succeeds.

In Solution 2 provided in the present disclosure, the historical trajectory information and the predicted trajectory information of the terminal device are introduced, to assist the access network device in selecting the target cell (or referred to as a paging cell) for more accurately paging the terminal device. This can reduce signaling overheads and a delay that are related to paging, and improve paging efficiency and accuracy. In addition, the prediction model is updated based on the actual location information of the terminal device that is successfully paged, so that accuracy of predicting a trajectory of the terminal device can be improved. In a possible design, Solution 2 above may be used in a scenario in which a terminal device in an inactive state is paged.

Solution 3

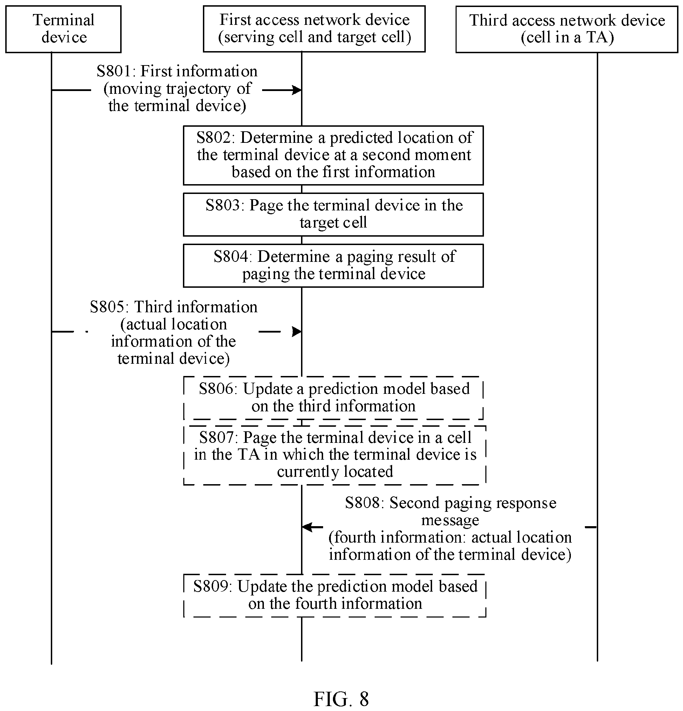

FIG. 8 is a schematic flowchart of a paging method. The method includes the following procedure.

S801: A terminal device sends first information to a first access network device, where the first information indicates a moving trajectory of the terminal device.

Specifically, refer to S701 for implementation. Details are not described again in the present disclosure.

S802: The first access network device determines a predicted location of the terminal device at a second moment based on the first information.

Specifically, refer to S702 for implementation. Details are not described again in the present disclosure.

In addition, the predicted location of the terminal device at the second moment is in a target cell. In a possible case, the target cell is not a cell managed by the first access network device. In another possible case, the target cell is a cell managed by the first access network device. In Solution 2, an example in which the target cell is a cell managed by the first access network device is used for description of subsequent steps.

S803: The first access network device pages the terminal device in the target cell based on the first information.

Optionally, if the first access network device can determine an SSB beam distribution status of the target cell, the first access network device may further determine, based on the first information, that the terminal device is located in a coverage range of a target beam in the target cell at the second moment, and the first access network device may specifically page the terminal device within the coverage range of the target beam in the target cell.

S804: The first access network device determines a paging result of paging the terminal device in the target cell.

In an optional implementation, if the terminal device is successfully paged in the target cell, the terminal device accesses the target cell, and the first access network device may communicate with the terminal device to obtain information such as a beam that is actually accessed by the terminal device in the target cell, an actual location of the terminal device when the paging succeeds, and an actual location of the terminal device before the paging succeeds. In this case, when determining that the terminal device is successfully paged in the target cell, the first access network device may perform the following steps S805 and S806.

In another optional implementation, when determining that the terminal device fails to be paged in the target cell, the first access network device may perform the following steps S807 to S809.

As optional steps, S805 to S809 are shown by using dashed lines in FIG. 7.

S805: The first access network device may obtain third information from the terminal device, where the third information is actual location information of the terminal device, and the third information may specifically indicate one or more of the following: a beam over which the terminal device accesses the target cell; location information of the terminal device when the paging succeeds; and location information of the terminal device before the paging succeeds.

Optionally, the third information or content indicated by the third information may be used to update the prediction model described in S801 or S802. This design can improve prediction accuracy. In a possible implementation, an updated prediction model may be used to predict a location of the terminal device after the paging succeeds. In this implementation, it may be understood that the third information is used to predict the location of the terminal device after the paging succeeds. As shown in FIG. 8, after performing S805, the first access device may further perform the following step S806.

S806: The first access network device updates the prediction model based on the third information.

Specifically, the first access network device may perform, based on the content indicated by the third information, reinforcement learning on the prediction model used by the first access network device, to update the prediction model.

In a possible implementation, the first access network device predicts, based on the third information, the location of the terminal device after the paging succeeds. To be specific, the first access network device first updates the prediction model based on the third information, and then predicts, by using an updated prediction model, the location of the terminal device after the paging succeeds.

S807: The first access network device pages the terminal device in a cell, other than the target cell, in a TA in which the terminal device is currently located.

Specifically, for this step, refer to the paging procedure triggered by the access network device (anchor base station) when the terminal device is in the inactive state in the conventional technology. A paging range of the first access network device may be specifically a cell included in an RNA configured in the TA. Details are not described in the present disclosure.

It is assumed that the terminal device is successfully paged in a cell in the TA in which the terminal device is currently located, and an access network device to which the cell belongs is denoted as a third access network device. The third access network device may feed back paging success related information to a core network element. Specifically, it may be understood as described in S607.

S808: The third access network device sends a second paging response message to the first access network device, where the second paging response message indicates that the terminal device is successfully paged in the cell managed by the third access network device. Optionally, the third access network device may notify the first access network device of a cell that is actually accessed by the terminal device, a beam that is actually accessed by the terminal device in the cell, an actual location when the paging succeeds, an actual location before the paging succeeds, and the like. For example, the third access network device may include fourth information in the second paging response message, and the fourth information is actual location information of the terminal device. The fourth information may specifically indicate one or more of the following: a cell accessed by the terminal device, a beam over which the terminal device accesses a cell, location information of the terminal device when the paging succeeds, and location information of the terminal device before the paging succeeds.

Optionally, the fourth information or content indicated by the fourth information may be used to update the prediction model described in S601 or S602. This design can improve prediction accuracy. In a possible implementation, an updated prediction model may be used to predict a location of the terminal device after the paging succeeds. In this implementation, it may be understood that the fourth information is used to predict the location of the terminal device after the paging succeeds. As shown in FIG. 8, after S808 is performed, the following step S809 may be further performed:

S809: The first access network device updates the prediction model based on the fourth information.

For example, when the first access network device derives, by using the prediction model, the N2 predicted locations of the terminal device after the first moment, if the first paging response message indicates that the terminal device is successfully paged, the first access network device may perform, based on the content indicated by the third information, reinforcement learning on the prediction model used by the first access network device, to update the prediction model. Alternatively, if the first paging response message indicates that the terminal device fails to be paged, and the second paging response message indicates that the terminal device is successfully paged, the first access network device may perform, based on the content indicated by the fourth information, reinforcement learning on the prediction model used by the first access network device, to update the prediction model.

In a possible implementation, the first access network device predicts, based on the fourth information, the location of the terminal device after the paging succeeds. To be specific, the first access network device first updates the prediction model based on the fourth information, and then predicts, by using an updated prediction model, the location of the terminal device after the paging succeeds.

In Solution 3 provided in the present disclosure, the historical trajectory information and the predicted trajectory information of the terminal device are introduced, to assist the access network device in selecting the target cell (or referred to as the paging cell) for more accurately paging the terminal device. This can reduce signaling overheads and a delay that are related to paging, and improve paging efficiency and accuracy. In addition, the prediction model is updated based on the actual location information of the terminal device that is successfully paged, so that accuracy of predicting a trajectory of the terminal device can be improved. In a possible design, Solution 3 above may be used in a scenario in which a terminal device in an inactive state is paged.

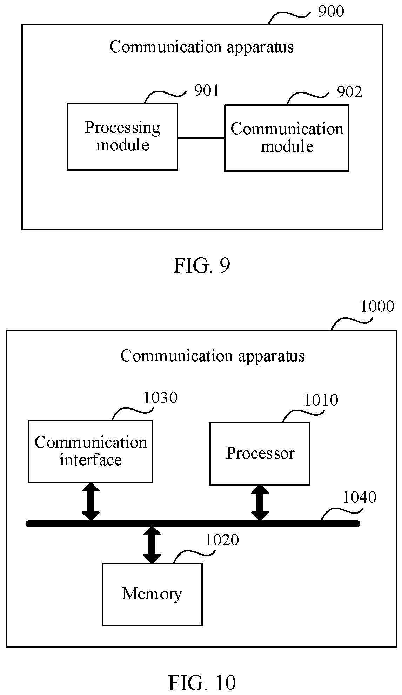

Based on the same concept, refer to FIG. 9. The present disclosure provides a communication apparatus 900. The communication apparatus 900 includes a processing module 901 and a communication module 902. The communication apparatus 900 may be a core network element, or may be a communication apparatus that is used in a core network element or matches a core network element and that can implement a paging method performed on the core network element side. Alternatively, the communication apparatus 900 may be a first access network device, or may be a communication apparatus that is used in a first access network device or matches a first access network device and that can implement a paging method performed on the first access network device side. Alternatively, the communication apparatus 900 may be a second access network device, or may be a communication apparatus that is used in the second access network device or matches a second access network device and that can implement a paging method performed on the second access network device side.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation on the core network element side or the first access network device side in the foregoing method. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 900 is used in the core network element, the processing module 901 may be configured to implement a processing function of the core network element in the examples in FIG. 6 to FIG. 8, and the communication module 902 may be configured to implement receiving and sending functions of the core network element in the examples in FIG. 6 to FIG. 8. Alternatively, the communication apparatus may be understood with reference to the third aspect and the possible designs in the third aspect in the summary.

When the communication apparatus 900 is used in the first access network device, the processing module 901 may be configured to implement a processing function of the first access network device in the examples in FIG. 6 to FIG. 8, and the communication module 902 may be configured to implement receiving and sending functions of the first access network device in the examples in FIG. 6 to FIG. 8. Alternatively, the communication apparatus may be understood with reference to the third aspect and the possible designs in the third aspect in the summary.

When the communication apparatus 900 is used in the second access network device, the processing module 901 may be configured to implement a processing function of the second access network device in the examples in FIG. 6 to FIG. 8, and the communication module 902 may be configured to implement receiving and sending functions of the second access network device in the examples in FIG. 6 to FIG. 8. Alternatively, the communication apparatus may be understood with reference to the fourth aspect and the possible designs in the fourth aspect in the summary.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using an entity apparatus. For example, if the apparatus is implemented by using a chip/chip circuit, the communication module may be an input/output circuit and/or a communication interface, and performs an input operation (corresponding to the foregoing receiving operation) and an output operation (corresponding to the foregoing sending operation). The processing module is an integrated processor, a microprocessor, or an integrated circuit.

Division into the modules in the present disclosure is an example, and is merely division into logical functions. There may be another division manner during actual implementation. In addition, functional modules in examples of the present disclosure may be integrated into one processor, or each of the modules may exist alone physically, or two or more modules may be integrated into one module. The integrated module may be implemented in a form of hardware, or may be implemented in a form of a software functional module.

Based on the same technical concept, the present disclosure further provides a communication apparatus 1000. For example, the communication apparatus 1000 may be a chip or a chip system. Optionally, in the present disclosure, the chip system may include a chip, or may include a chip and another discrete component.

The communication apparatus 1000 may be configured to implement a function of any network element in the communication system described in the foregoing example. The communication apparatus 1000 may include at least one processor 1010. The processor 1010 is coupled to a memory. Optionally, the memory may be located in the apparatus, the memory may be integrated with the processor, or the memory may be located outside the apparatus. For example, the communication apparatus 1000 may further include at least one memory 1020. The memory 1020 stores a computer program, a computer program or instructions, and/or data necessary for implementing any one of the foregoing examples. The processor 1010 may execute the computer program stored in the memory 1020, to complete the method in any one of the foregoing examples.

The communication apparatus 1000 may further include a communication interface 1030, and the communication apparatus 1000 may exchange information with another device through the communication interface 1030. For example, the communication interface 1030 may be a transceiver, a circuit, a bus, a module, a pin, or a communication interface of another type. When the communication apparatus 1000 is a chip-type apparatus or circuit, the communication interface 1030 in the apparatus 1000 may alternatively be an input/output circuit, and may input information (or referred to as receiving information) and output information (or referred to as sending information). The processor is an integrated processor, a microprocessor, an integrated circuit, or a logic circuit, and the processor may determine output information based on input information.

Couplings in the present disclosure are indirect couplings or communication connections between apparatuses, units, or modules, may be electrical, mechanical, or in another form, and are used for information exchange between the apparatuses, the units, or the modules. The processor 1010 may operate in collaboration with the memory 1020 and the communication interface 1030. A specific medium connecting the processor 1010, the memory 1020, and the communication interface 1030 is not limited in the present disclosure.

Optionally, refer to FIG. 10. The processor 1010, the memory 1020, and the communication interface 1030 are connected to each other through a bus 1040. The bus 1040 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 10, but this does not mean that there is only one bus or only one type of bus.

In the present disclosure, the processor may be a general-purpose processor, a digital signal processor, an application-specific integrated circuit, a field programmable gate array or another programmable logic device, a discrete gate or a transistor logic device, or a discrete hardware component, and can implement or perform methods, steps, and logical block diagrams that are disclosed in the present disclosure. The general-purpose processor may be a microprocessor, any conventional processor, or the like. The steps of the methods disclosed with reference to the present disclosure may be directly implemented by a hardware processor, or may be implemented by a combination of hardware and a software module in a processor.

In the present disclosure, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in the present disclosure may alternatively be a circuit or any other apparatus that can implement a storage function, and is configured to store program instructions and/or data.

In a possible implementation, the communication apparatus 1000 may be used in a first access network device. Specifically, the communication apparatus 1000 may be a first access network device, or may be an apparatus that can support a first access network device in implementing functions of the first access network device in any one of the foregoing examples. The memory 1020 stores a computer program (or instructions) and/or data for implementing the functions of the first access network device in any one of the foregoing examples. The processor 1010 may execute the computer program stored in the memory 1020, to complete the method performed by the first access network device in any one of the foregoing examples. When the communication apparatus 1000 is used in the first access network device, the communication interface in the communication apparatus 1000 may be configured to interact with a terminal device, and send information to the terminal device or receive information from the terminal device.

In another possible implementation, the communication apparatus 1000 may be used in a core network element.

Specifically, the communication apparatus 1000 may be a core network element, or may be an apparatus that can support a core network element in implementing functions of the core network element in any one of the foregoing examples. The memory 1020 stores a computer program (or instructions) and/or data for implementing the functions of the core network element in any one of the foregoing examples. The processor 1010 may execute the computer program stored in the memory 1020, to complete the method performed by the core network element in any one of the foregoing examples. When the communication apparatus 1000 is used in the core network element, the communication interface in the communication apparatus 1000 may be configured to interact with a first access network device or a second access network device, and send information to the first access network device or the second access network device or receive information from the first access network device or the second access network device.

The communication apparatus 1000 provided in this example may be used in the first access network device to complete the foregoing method performed by the first access network device, or may be used in the second access network device to complete the foregoing method performed by the second access network device, or may be used in the core network element to complete the foregoing method performed by the core network element. Therefore, for technical effects that can be achieved by the communication apparatus 1000, refer to the foregoing method examples. Details are not described herein again.

All or some of the technical solutions provided in the present disclosure may be implemented by using software, hardware, firmware, or any combination thereof. When software is used to implement the technical solutions, all or some of the technical solutions may be implemented in a form of a computer program product. The computer program product includes one or more computer instructions. When the computer program instructions are loaded and executed on a computer, the procedures or functions according to the present disclosure are all or partially generated. The computer may be a general-purpose computer, a dedicated computer, a computer network, a terminal device, an access network device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In the present disclosure, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

It is clear that a person skilled in the art can make various modifications and variations to the present disclosure without departing from the scope of the present disclosure. In this way, the present disclosure is intended to cover these modifications and variations of the present disclosure provided that they fall within the scope of protection defined by the claims of the present disclosure and their equivalent technologies.

**Claims**

1.   A paging method, comprising:

obtaining first information, wherein the first information indicates a moving trajectory of a terminal device, the moving trajectory of the terminal device comprises N1 historical locations of the terminal device before a first moment and/or N2 predicted locations of the terminal device after the first moment, N1 and N2 are positive integers, and the first moment is a moment at which the terminal device changes from a connected state to a non-connected state or an inactive state;
determining a predicted location of the terminal device at a second moment based on the first information, wherein the second moment is later than the first moment; and
sending, at the second moment, a paging message to an access network device to which a target cell belongs, wherein the paging message comprises information indicating the target cell, and the predicted location of the terminal device at the second moment is in the target cell.

2.   The method according to claim 1, wherein the obtaining first information comprises:
obtaining, before the first moment, a context release message of the terminal device from an access network device that provides a service for the terminal device, wherein the context release message comprises the first information.

**3.** The method according to claim 1, wherein the obtaining first information comprises:
receiving the first information from the terminal device before the first moment.

**4.** The method according to any one of claims 1 to 3, wherein the determining a predicted location of the terminal device at a second moment based on the first information comprises:

when the moving trajectory of the terminal device comprises the N1 historical locations, determining the predicted location of the terminal device at the second moment based on the N1 historical locations of the terminal device before the first moment; or
when the moving trajectory of the terminal device comprises the N2 predicted locations, determining the predicted location of the terminal device at the second moment from the N2 predicted locations.

**5.** The method according to any one of claims 1 to 4, wherein the predicted location of the terminal device at the second moment is in a coverage range of a target beam in the target cell, and the paging message comprises information indicating the target beam.

**6.** The method according to any one of claims 1 to 4, further comprising:
sending, at the second moment, second information to the access network device to which the target cell belongs, wherein the second information indicates the N2 predicted locations of the terminal device after the first moment, the second information is used to determine a target beam in the target cell, and the predicted location of the terminal device at the second moment is in a coverage range of the target beam.

**7.** The method according to any one of claims 1 to 6, further comprising:
receiving a first paging response message from the access network device to which the target cell belongs, wherein the first paging response message indicates that the terminal device is successfully paged, the first paging response message comprises third information, and the third information indicates one or more of the following:

a beam over which the terminal device accesses the target cell;
location information of the terminal device when the paging succeeds; or
location information of the terminal device before the paging succeeds.

**8.** The method according to claim 7, wherein the method further comprises:
predicting, based on the third information, a location of the terminal device after the paging succeeds.

**9.** A paging method, comprising:

obtaining a paging message, wherein the paging message comprises information indicating a target cell, the target cell is determined based on a moving trajectory of a terminal device, the moving trajectory of the terminal device comprises N1 historical locations of the terminal device before a first moment and/or N2 predicted locations of the terminal device after the first moment, N1 and N2 are positive integers, the first moment is a moment at which the terminal device changes from a connected state to a non-connected state or an inactive state, a predicted location of the terminal device at a second moment is in the target cell, and the second moment is later than the first moment; and
paging the terminal device in the target cell based on the paging message.

**10.** The method according to claim 9, wherein the paging message comprises information indicating a target beam, and the predicted location of the terminal device at the second moment is in a coverage range of the target beam.

**11.** The method according to claim 9, further comprising:

obtaining second information, wherein the second information indicates the N2 predicted locations of the terminal device after the first moment; and
determining a target beam in the target cell based on the second information, wherein the predicted location of the terminal device at the second moment is in a coverage range of the target beam.

**12.** The method according to claim 10 or 11, wherein the paging the terminal device in the target cell comprises:
paging the terminal device in the coverage range of the target beam in the target cell.

13. The method according to any one of claims 9 to 12, further comprising:
sending a paging response message, wherein the paging response message indicates that the terminal device is successfully paged, the paging response message comprises third information, and the third information indicates one or more of the following:

a beam over which the terminal device accesses the target cell;
location information of the terminal device when the paging succeeds; and
location information of the terminal device before the paging succeeds.

14. A communication apparatus, comprising a communication module and a processing module, wherein

the communication module is configured to obtain first information, wherein the first information indicates a moving trajectory of a terminal device, the moving trajectory of the terminal device comprises N1 historical locations of the terminal device before a first moment and/or N2 predicted locations of the terminal device after the first moment, N1 and N2 are positive integers, and the first moment is a moment at which the terminal device changes from a connected state to a non-connected state or an inactive state; and
the processing module is configured to:

determine a predicted location of the terminal device at a second moment based on the first information, wherein the second moment is later than the first moment; and
send, at the second moment through the communication module, a paging message to an access network device to which a target cell belongs, wherein the paging message comprises information indicating the target cell, and the predicted location of the terminal device at the second moment is in the target cell.

15. The apparatus according to claim 14, wherein the communication module is specifically configured to:
obtain, before the first moment, a context release message of the terminal device from an access network device that provides a service for the terminal device, wherein the context release message comprises the first information.

16. The apparatus according to claim 14, wherein the communication module is specifically configured to:
receive the first information from the terminal device before the first moment.

17. The apparatus according to any one of claims 14 to 16, wherein the processing module is specifically configured to:

when the moving trajectory of the terminal device comprises the N1 historical locations, determine the predicted location of the terminal device at the second moment based on the N1 historical locations of the terminal device before the first moment; or
when the moving trajectory of the terminal device comprises the N2 predicted locations, determine the predicted location of the terminal device at the second moment from the N2 predicted locations.

18. The apparatus according to any one of claims 14 to 17, wherein the predicted location of the terminal device at the second moment is in a coverage range of a target beam in the target cell, and the paging message comprises information indicating the target beam.

19. The apparatus according to any one of claims 14 to 17, wherein the processing module is further configured to:
send, at the second moment through the communication module, second information to the access network device to which the target cell belongs, wherein the second information indicates the N2 predicted locations of the terminal device after the first moment, the second information is used to determine a target beam in the target cell, and the predicted location of the terminal device at the second moment is in a coverage range of the target beam.

20. The apparatus according to any one of claims 14 to 19, wherein the communication module is further configured to:
receive a first paging response message from the access network device to which the target cell belongs, wherein the first paging response message indicates that the terminal device is successfully paged, the first paging response message comprises third information, and the third information indicates one or more of the following:

a beam over which the terminal device accesses the target cell;
location information of the terminal device when the paging succeeds; and
location information of the terminal device before the paging succeeds.

21. The apparatus according to claim 20, wherein the processing module is further configured to:
predict, based on the third information, a location of the terminal device after the paging succeeds.

22. A paging apparatus, comprising a communication module and a processing module, wherein

the communication module is configured to obtain a paging message, wherein the paging message comprises information indicating a target cell, the target cell is determined based on a moving trajectory of a terminal device, the moving trajectory of the terminal device comprises N1 historical locations of the terminal device before a first moment and/or N2 predicted locations of the terminal device after the first moment, N1 and N2 are positive integers, the first moment is a moment at which the terminal device changes from a connected state to a non-connected state or an inactive state, a predicted location of the terminal device at a second moment is in the target cell, and the second moment is later than the first moment; and
the processing module is configured to page the terminal device in the target cell based on the paging message.

23. The apparatus according to claim 22, wherein the paging message comprises information indicating a target beam, and the predicted location of the terminal device at the second moment is in a coverage range of the target beam.

24. The apparatus according to claim 22, wherein

the communication module is further configured to obtain second information, wherein the second information indicates the N2 predicted locations of the terminal device after the first moment; and
the processing module is further configured to determine a target beam in the target cell based on the second information, wherein the predicted location of the terminal device at the second moment is in a coverage range of the target beam.

25. The apparatus according to claim 23 or 24, wherein the processing module is further configured to:
page the terminal device in the coverage range of the target beam in the target cell.

26. The apparatus according to any one of claims 22 to 25, wherein the processing module is further configured to:
send a paging response message through the communication module, wherein the paging response message indicates that the terminal device is successfully paged, the paging response message comprises third information, and the third information indicates one or more of the following:

a beam over which the terminal device accesses the target cell;
location information of the terminal device when the paging succeeds; and
location information of the terminal device before the paging succeeds.

27. A communication apparatus, comprising:
a processor, wherein the processor is coupled to a memory, and the processor is configured to invoke computer program instructions stored in the memory, to perform the method according to any one of claims 1 to 8.

28. A communication apparatus, comprising:
a processor, wherein the processor is coupled to a memory, and the processor is configured to invoke computer program instructions stored in the memory, to perform the method according to any one of claims 9 to 13.

29. A communication system, comprising the communication apparatus according to any one of claims 14 to 21 and claim 27, and the communication apparatus according to any one of claims 22 to 26 and claim 27.

30. A computer-readable storage medium, wherein the computer-readable storage medium stores instructions, and when the instructions are run on a computer, the computer is enabled to perform the method according to any one of claims 1 to 8 or the method according to any one of claims 9 to 13.

31. A computer program product, comprising instructions, wherein when the instructions are run on a computer, the computer is enabled to perform the method according to any one of claims 1 to 8 or the method according to any one of claims 9 to 13.

32. A chip, wherein the chip is configured to read a computer program stored in a memory, to perform the method according to any one of claims 1 to 8 or the method according to any one of claims 9 to 13.

Access network device 110

Terminal device 120          Terminal device 130

FIG. 1

| Core network |
|---|

Access network (RAN)

gNB 1

CU

DU          DU

gNB 2

CU

DU          DU

FIG. 2A

FIG. 2B

FIG. 3

One T includes
N PFs

Offset

| T | T | T |

| | PF | | PF | | PF | | PF | ... | | PF |

One PF includes
Ns POs

PO  PO  PO  ...  PO

One PO includes
S SSB beams

Slot

SSB beam          SSB beam          SSB beam

FIG. 4

$$y = f\left(\sum_{i=0}^{n} w_i x_i + b\right)$$

FIG. 5A

FIG. 5B

FIG. 5C

| First access network device (serving cell) | Core network element | Second access network device (target cell) | Third access network device (cell in a TA) |
|---|---|---|---|

S601: First information (moving trajectory of a terminal device)

S602: Determine a predicted location of the terminal device at a second moment based on the first information

S603: Paging message

S604: Page the terminal device in the target cell based on the paging message

S605: First paging response message (actual location information of the terminal device)

S606: Page the terminal device in a cell in the TA in which the terminal device is currently located

S607: Second paging response message (actual location information of the terminal device)

S608: Feed back a paging success and the actual location information of the terminal device

S609: Update a prediction model based on the actual location information of the terminal device

FIG. 6

| Terminal device | First access network device (serving cell) | Second access network device (target cell) | Third access network device (cell in a TA) |

S701: First information (moving trajectory of the terminal device)

S702: Determine a predicted location of the terminal device at a second moment based on the first information

S703: Paging message

S704: Page the terminal device in the target cell based on the paging message

S705: First paging response message (actual location information of the terminal device)

S706: Page the terminal device in a cell in the TA in which the terminal device is currently located

S707: Second paging response message (actual location information of the terminal device)

S708: Update a prediction model based on the actual location information of the terminal device

FIG. 7

| Terminal device | First access network device (serving cell and target cell) | Third access network device (cell in a TA) |
|---|---|---|

S801: First information (moving trajectory of → the terminal device)

S802: Determine a predicted location of the terminal device at a second moment based on the first information

S803: Page the terminal device in the target cell

S804: Determine a paging result of paging the terminal device

S805: Third information (actual location information of the terminal device)

S806: Update a prediction model based on the third information

S807: Page the terminal device in a cell in the TA in which the terminal device is currently located

S808: Second paging response message (fourth information: actual location information of the terminal device)

S809: Update the prediction model based on the fourth information

FIG. 8

900

Communication apparatus

901

Processing module

902

Communication module

FIG. 9

1000

Communication apparatus

1030

Communication interface

1010

Processor

1040

1020

Memory

FIG. 10

## INTERNATIONAL SEARCH REPORT

| International application No. |
| --- |
| **PCT/CN2023/095789** |

### A. CLASSIFICATION OF SUBJECT MATTER

H04W68/02(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXT, CNKI, 3GPP: 连接态, 空闲态, 非激活态, 位置, 预测, 估计, 核心网, 接入网, 小区, 寻呼, 上下文, 释放, connected, idle, inactive, location, estimate, CN, access, cell, paging, context, rlease

### C. DOCUMENTS CONSIDERED TO BE RELEVANT

| Category* | Citation of document, with indication, where appropriate, of the relevant passages | Relevant to claim No. |
| --- | --- | --- |
| X | CN 113784286 A (ALIBABA DAMO ACADEMY (HANGZHOU) TECHNOLOGY CO., LTD.) 10 December 2021 (2021-12-10) see claims 1-14, and figures 2-3 | 1, 3-14, 16-30 |
| Y | CN 113784286 A (ALIBABA DAMO ACADEMY (HANGZHOU) TECHNOLOGY CO., LTD.) 10 December 2021 (2021-12-10) see claims 1-14, and figures 2-3 | 2,15 |
| Y | CN 114126047 A (DATANG MOBILE COMMUNICATIONS EQUIPMENT CO., LTD.) 01 March 2022 (2022-03-01) see description, paragraphs 8-19, and figure 2 | 2,15 |
| A | CN 107948915 A (ZTE CORP.) 20 April 2018 (2018-04-20) entire document | 1-30 |
| A | CN 113115441 A (CHONGQING ZHIZHU HUAXIN TECHNOLOGY CO., LTD.) 13 July 2021 (2021-07-13) entire document | 1-30 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 August 2023** | **29 August 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/095789**

| Patent document cited in search report | | | Publication date (day/month/year) | Patent family member(s) | | | Publication date (day/month/year) |
|---|---|---|---|---|---|---|---|
| CN | 113784286 | A | 10 December 2021 | None | | | |
| CN | 114126047 | A | 01 March 2022 | None | | | |
| CN | 107948915 | A | 20 April 2018 | WO | 2018068752 | A1 | 19 April 2018 |
| CN | 113115441 | A | 13 July 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210583492